# EUROPÄISCHE PATENTSCHRIFT

(11) **EP 3 256 236 B1**
(45) Veröffentlichungstag und Bekanntmachung des Hinweises auf die Patenterteilung: **27.05.2020**
(21) Anmeldenummer: 16707395.6
(22) Anmeldetag: 12.02.2016
(51) Int. Cl.: B01D 53/83, B01D 53/86, B01D 53/90, B01D 53/96, C04B 7/36

(54) **VERFAHREN ZUR REINIGUNG VON ABGASEN BEI DER THERMISCHEN AUFARBEITUNG VON MINERALSTOFFEN**
METHOD FOR PURIFYING EXHAUST GASES DURING THE THERMAL PROCESSING OF MINERAL MATERIALS
PROCÉDÉ D'ÉPURATION DE GAZ D'ÉCHAPPEMENT LORS DU RETRAITEMENT THERMIQUE DE MATIÈRES MINÉRALES

(30) Priorität: 13.02.2015 DE 102015202698
(43) Veröffentlichungstag der Anmeldung: 20.12.2017
(73) Patentinhaber: Maerz Ofenbau AG, 8027 Zürich (CH)
(72) Erfinder: ZURHOVE, Franz-Josef, 79761 Waldshut-Tiengen (DE)
(74) Vertreter: thyssenkrupp Intellectual Property GmbH
(86) Internationale Anmeldenummer: PCT/EP2016/052999
(87) Internationale Veröffentlichungsnummer: WO 2016/128545

(56) Entgegenhaltungen:
- EP-A1- 1 842 836
- WO-A1-2009/108983
- WO-A1-2015/067363
- DE-A1-102009 022 903
- DE-A1-102009 036 948
- DE-B3-102010 004 011

## Beschreibung

Die Erfindung betrifft ein Verfahren zur Reinigung von Abgasen bei der thermischen Aufbereitung von Mineralstoffen. Eine thermische Aufarbeitung von Mineralstoffen erfolgt beispielsweise in der Zement- oder Mineralsindustrie.

Unter Abgasen sind insbesondere Bypassgase zu verstehen. Bei der Klinkerherstellung steigt der Anteil von Ersatzbrennstoffen stark an, was wiederum einen zunehmenden Eintrag von Chlor in den Herstellungsprozess zufolge hat. Aufgrund seiner Verdampfungs- und Kondensationstemperaturen bildet Chlor in Form chlorhaltiger Verbindungen einen internen Kreislauf im Vorwärmer/Ofensystem aus. Über ein Bypasssystem, bei dem ein Teil des Ofengases am Ofeneinlauf entnommen wird, wird dieser Kreislauf entlastet. Auch eine Entlastung von SO₂ und Alkalien kann mit einem solchen Bypass erfolgen. Der steigende Einsatz von Ersatzbrennstoffen fordert teilweise hohe Bypassraten in der Größenordnung von bis zu 10% und mehr. Auch in Anlagen, welche einen Steinbruch mit einem hohem Salzgehalt verwenden, ist unabhängig von der Verwendung von Ersatzbrennstoffen eine hohe Bypassrate notwendig. Das Bypassabgas wird am Ofeneinlauf mit Temperaturen in Abhängigkeit der Anwendung der Ofenanlage von beispielsweise mehr als 600 °C oder von mehr als 1000 °C abgezweigt und kurz nach dem Abzug beispielsweise in der sogenannten Bypassglocke oder einem Wärmeaustausch auf 500 °C bis 150 °C gequencht. Mit diesen Temperaturen kann das Gas einem Abscheider, z.B. einem Elektro- bzw. einem Gewebefilter, zur Staubabscheidung zugeführt werden. Aufgrund ihrer Kondensationstemperaturen werden so auch gasförmiges Chlor und Schwefel im Bypassfilter eingebunden.

Gemäß der DD 274 022 A1 wird ein alkali- und chlorhaltiges Bypassgas aus dem Klinkerbrennprozess bei Temperaturen von 1050 °C bis 1250 °C abgezweigt und durch Zuführung von Frischluft auf 700 °C bis 1050 °C abgekühlt. Danach werden 50 bis 70 % des in Gasstrom enthaltenen Staubes vom Gasstrom getrennt und dem Brennprozess wieder zugeführt. Durch den geringen Abscheidegrad bei der Trennung des Staubes vom Gasstrom werden nur die alkaliarmen, grobkörnigen Staubanteile aus dem Gasstrom abgetrennt und dem Brennprozess wieder aufgegeben. Bei Temperaturen von 700 °C bis 1050 °C sind die Alkalien zum Teil noch flüchtig bzw. schlagen sich vorwiegend an den kleinsten Kornfraktionen des Staubes nieder. Nach einem weiteren Abkühlen werden dann diese Schadstoffe vom Gasstrom getrennt.

Stickoxide - NO und NO₂ werden zusammenfassend mit NOₓbezeichnet - entstehen bei der Klinkerherstellung als thermisches NOₓ aufgrund der hohen Temperaturen im Ofen durch die Oxidation von Stickstoff aus der Verbrennungsluft. Weiterhin entsteht Brennstoff-NOₓ durch Reaktion von Stickstoff, welcher durch den Brennstoff eingetragen wird. Eine Minderung von NOₓ erfolgt typischerweise durch eine gestufte Verbrennung und die Eindüsung eines ammoniakhaltigen Reduktionsmittels im Bereich des Kalzinators oder Ofeneinlaufs (SNCR). Stickoxide im Ofenabgas werden außerdem mittels Katalysatoren im nachgeschalteten Abgasstrang entfernt.

Bestehen hohe Anforderungen an die Stickoxidkonzentration im Reingas, wie sie beispielsweise mit 200 mg pro Normkubikmeter trockenes Abgas bei 10% O₂ nach Anlage 3, 2.1 a) 17. BlmSchV bei der Mitverbrennung von Abfällen in Zementwerken gefordert werden, kann für eine Vielzahl von Anlagen die Stickstoffkonzentration in einer gemittelten Abgaskonzentration von Bypass- und Ofengas nicht eingehalten werden. Eine Verbesserung könnte durch die Entstickung des Bypassgases erreicht werden. Allerdings kann die SNCR-Reaktion aufgrund der geringen Verweilzeiten bei ausreichend hohen Temperaturen im Bypassgas nur unzureichend ablaufen. Wird das Bypassgas nicht mit dem Ofenabgas gemischt und stattdessen über einen eigenen Kamin in die Umwelt entlassen, so stellen bereits heute übliche Stickoxidkonzentrationen im Reingas von 500 mg/Nm³ trockenes Abgas bei 10% O₂ einen mit dem SNCR-Verfahren nicht erreichbaren Wert dar.

Aus der DE 10 2009 022 903 A1 ist ein Verfahren zur Wärmebehandlung von feinkörnigem Material bekannt, bei dem das Material in einem Vorwärmer im Gegenstrom zu heißen Abgasen vorgewärmt und anschließend calciniert und/oder gebrannt wird. Der Staubgehalt der Abgase des Vorwärmers wird in einem Staubabscheider reduziert, bevor das Abgas zur Wärmerekuperation einem Wärmetauscher/Abhitzekessel und/oder zur Entstickung einem Katalysator zugeführt wird. Der Staubgehalt des Abgases wird dabei im Staubabscheider auf einen Wert von 1 bis 10 g pro Normkubikmeter reduziert.

Aus der WO 2009/089559 A1 ist eine Anlage zur Reinigung der Rauchgase eines Ofens mit zumindest einem selektiven Reduktionskatalysator zur Reduktion von im Rauchgas enthaltenen Stickoxiden sowie einer Staubabscheidung, und ein Verfahren zur Reinigung der Rauchgase eines Ofens durch selektive katalytische Reduktion von Stickoxiden mit einem Reduktionsmittel und einem Reduktionskatalysator sowie durch Staubabscheidung bekannt.

Aus der DE 10 2013 112 210 ist ein Verfahren zur Reinigung von Bypassgasen der Zement- oder Mineralsindustrie bekannt, welches die Verfahrensschritte Abkühlung des entnommenen Bypassgases auf 500 °C bis 150 °C, Grobentstaubung des Bypassgases, wobei die Staubbeladung um 30 bis 95% und Minderung der im teilentstaubten Bypassgas enthaltenen, gasförmigen Bestandteile, wobei eine katalytische Minderung von Stickoxiden und/oder Kohlenwasserstoffen und/oder Kohlenstoffmonoxid und gleichzeitig hierzu eine weitere Entstaubung erfolgt, umfasst.

Aus der US 2014 / 0170046 A1 ist die Zugabe von festen Sorptionsmitteln vor dem Katalysator in einer Anlage zur thermischen Aufarbeitung von Mineralstoffen bekannt.

Aus der DE 10 2010 004 011 B3 ist eine Anlage zur thermischen Aufarbeitung von Stoffen mit nachgeschalteter Entstaubungseinrichtung bekannt.

Allen zuvor genannten Patentschriften ist gemeinsam, dass der Abgasstaubgehalt in diesen Verfahren entweder auf eine absolute Konzentration oder durch die Vorgabe einer Abscheiderate indirekt vorgeschrieben wird. Der Abgasstaubgehalt beschreibt bei nicht oder moderat kohäsiven Stäuben den benötigten Aufwand, die Gaskanäle eines Katalysators von Verstopfungen und Ablagerungen von Staub freizuhalten. Er ist aber in Anwendungen mit stärker kohäsiven Stäuben als Kenngröße nicht ausreichend, kann sogar nichtssagend sein und im schlimmsten Falle zu Fehlern führen, da durch die Staubkonzentration nämlich nichts über zusätzliche physikalische und chemische Wirkungen des Staubes auf einen Katalysator ausgesagt wird. Diese Wirkungen können Verkleben, Abrasion/Erosion oder Vergiftungen umfassen. Besonders Stäube mit Alkalichlorid- und Alkalisulfatanteilen - unter diesem Begriff sollen in dieser Schrift auch die Erdalkalien inkludiert werden - neigen bei einer Kombination aus ausreichend hoher Konzentration dieser Anteile und/oder hoher Temperaturen zum Kleben. Weiterhin sind sowohl Kalium als auch Natrium starke Katalysatorgifte. Ihr Eindringen in die Katalysatorporen muss daher unbedingt verhindert werden. Bei schleißenden Bestandteilen im Staub wird es nur notwendig sein, die schleißende Bestandteile abzuscheiden oder ihren Anteil zu verringern. Hierzu ist eine der Partikelgrößenverteilung entsprechende Abscheideleistung notwendig, deren Wert sich aus der Zusammensetzung des Staubes ergibt. Die Zusammensetzung kann sich gegebenenfalls jedoch zeitlich ändern. Üblicherweise ist eine Abscheidung der groben Fraktionen zielführend, sodass die im Stand der Technik beschriebenen Verfahren hier zum Ziel führen. Bei deaktivierenden Bestandteilen gilt ähnliches, jedoch wäre hier eine beinahe vollständige Vorabscheidung/Eliminierung der submikronen Partikel wünschenswert. Eine Vorabscheidung reicht aber oft nicht aus, um ein zufriedenstellendes Ergebnis für die Lebensdauer und Zuverlässigkeit des Katalysators zu erzielen, oder wäre nicht wirtschaftlich sinnvoll realisierbar.

Aus der EP 1 842 836 A1 ist eine Vorrichtung zur Behandlung von Abgasen bei der Zementklinkerherstellung bekannt.

Aus der DE 10 2009 036 948 A1 ist ein Verfahren zur Reduktion von Stickoxiden staubhaltiger Abgase mittels eines SCR-Katalysators bekannt, wobei die Abgase vor Eintritt in den Katalysator durch Agglomeration von Staubpartikeln konditioniert werden.

Aus der WO 2015/067363 A1 Verfahren zur Reinigung von Bypassgasen der Zement- oder Mineralindustrie mit einer Abkühlung, einer Grobentstaubung und einer Minderung bekannt.

Aus der WO 2009/108983 A1 ist eine Anlage zur Reinigung der Rauchgase eines Zement-Drehrohrofens mit zumindest einer Staubabscheidungsvorrichtung bekannt.

Aufgabe der Erfindung ist es, ein Verfahren zu schaffen, bei welchem die Minderung von gasförmigen Bestandteilen auch beim Vorhandensein von schleißenden, deaktivierenden oder klebenden Stäuben zuverlässig erfolgt.

Gelöst wird die Aufgabe durch das erfindungsgemäße Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren zur Reinigung von Abgasen bei der thermischen Aufarbeitung von Mineralstoffen umfasst die folgenden Verfahrensschritte, wobei die Abgase Stäube beinhalten:
In Schritt b) erfolgt eine Entstaubung des Abgases, wobei die Staubbeladung um 30 % bis 99,999 % reduziert wird.
In Schritt c) erfolgt eine Einstellung der Eigenschaften des Reststaubes durch Zugeben von einem oder mehreren Feststoffen.
In Schritt d) erfolgt eine Minderung eines oder mehrerer gasförmiger Bestandteile ausgewählt aus der Gruppe umfassend Stickoxid, Kohlenwasserstoffen und Kohlenmonoxid.

Die Zugabe von Feststoff in Schritt c) kann durch Zugabe eines Feststoffes, durch Einblasen eines Feststoffes mittels eines Gasstromes oder Zuführung eines feststoffbeladenen Gasstroms erfolgen.

Erfindungsgemäß handelt es sich bei den Stäuben im Abgas um schleißende, deaktivierende oder klebende Stäube.

Erfindungsgemäß erfolgt in Schritt c) die Zugabe von Stäuben, die keine oder nur geringe schleißende, deaktivierende oder klebrige Eigenschaften aufweisen.

Durch eine Verdünnung des verbleibenden Reststaubs mit für den Katalysator harmlosem Staub wird der Staub auf die gewünschten, für den Katalysator weniger schädlichen Eigenschaften eingestellt. Hierzu wird bevorzugt Staub, der an einer anderen Stelle des Gesamtprozesses anfällt, verwendet. Harmlos bedeutet in diesem Kontext, dass die Eigenschaften sich von denen des Reststaubs unterscheiden und sich Verschleiß und/oder Deaktivierung und/oder Verkleben des Katalysators verbessern und mit weiteren Einrichtungen und Vorkehrungen bzw. Maßnahmen zur Begrenzung von Verschleiß und/oder Deaktivierung und/oder Verkleben zuverlässig kontrolliert werden können. Beispielsweise kann Verschleiß durch eine Stirnkantenhärtung und Verkleben durch eine leistungsfähige Staubblasvorrichtung kontrolliert werden.

Durch die Zugabe von Feststoffen mit anderen Eigenschaften kann die Eigenschaft des Reststaubes des Abgases gezielt eingestellt werden. Dieses ist vorteilhaft, da schleißende, deaktivierende oder klebende Stäube im nachfolgenden Schritt d) eine Minderung von gasförmigen Bestandteilen verschlechtern oder gar verhindern können. Beispielsweise können sich klebende Stäube auf Katalysatoroberflächen absetzen und so die Katalyse erschweren, abrasive Stäube können Katalysatoren mechanisch beschädigen.

Im einfachsten Falle kann der Feststoff kontinuierlich in konstanter Menge zugegeben werden.

In einer weiteren Ausführungsform der Erfindung wird in Schritt b) die Staubbeladung um 50 % bis 99,999 % reduziert. In einer weiteren bevorzugten Ausführungsform der Erfindung wird in Schritt b) die Stabbeladung um 75 % bis 99,999 % reduziert. In einer weiteren bevorzugten Ausführungsform der Erfindung wird in Schritt b) die Stabbeladung um 85 % bis 99,999 % reduziert. In einer besonders bevorzugten Ausführungsform der Erfindung wird in Schritt b) die Staubbeladung um 95 % bis 99,999 % reduziert.

In einer weiteren Ausführungsform der Erfindung wird der in Schritt c) zugegebene Feststoff ausgewählt aus der Gruppe umfassend Aktivkohle, Zement, Rohmehl, Filterstaub und Branntkalk. Besonders bevorzugt wird der in Schritt c) zugegebene Feststoff ausgewählt aus der Gruppe umfassend Rohmehl und Filterstaub. Weiterhin bevorzugt kann auch eine einzelne Komponente der Ausgangsmaterialien der Rohmehlherstellung in Schritt c) eingesetzt werden.

In einer weiteren Ausführungsform der Erfindung wird der Feststoff aus dem Gesamtproduktionsprozess entnommen. Dieses hat den Vorteil, dass keine weiteren Edukte für den Gesamtprozess vorgehalten werden müssen. Insbesondere kann der Feststoff aus der Abgasreinigung entnommen werden. Dieses führt dazu, dass der Feststoff wenigstens teilweise in der Abgasbehandlung rezirkuliert. Dieses ist besonders bevorzugt, wenn es sich bei dem Feststoff um einen reaktiven Zusatzstoff handelt, wobei reaktiv in diesem Zusammenhang, neben chemisch reaktiv auch Physisorption und Chemisorption umfasst. Beispielsweise kann es sich bei dem Zusatzstoff um Aktivkohle handeln. In diesem Fall ist selbstverständlich, dass der Feststoff nicht vollständig rezirkulieren kann, da es ansonsten zu einer ständigen Anreicherung der Schadstoffe im Prozess kommen würde.

Erfindungsgemäß erfolgt die Minderung im Schritt d) mittels einer katalytischen Minderungstechnologie.

Die Reduktion der Stickoxide erfolgt beispielsweise bei Temperaturen von 500 °C bis 150 °C vorzugsweise 440 °C bis 220 C, höchstvorzugsweise 400 °C bis 260 °C. Beim Verfahren zur Herstellung von gebranntem Material mit Hilfe eines Brennofens wird üblicherweise eine Teilmenge von in einem Brennofen entstehender Ofenabgase als Bypassgas abgezogen und gemäß den obigen Maßnahmen gereinigt. Weiterhin können die Stickoxide des verbleibenden Ofenabgases beispielsweise mittels SNCR-Verfahren im Vorwärmer oder Kalzinator reduziert werden, bevor das Ofenabgas nach dem Vorwärmer mit dem gereinigten Bypassgas wieder zusammengeführt wird. Im weiteren Abgasstrang können vor oder nach der Zusammenführung der Abgase, weitere Verfahrensstufen, wie Roh- und Kohlemühlen oder Kühltürme enthalten sein. Anlagentechnisch schließt sich dann an dem Brennofen ein Abgasstrang (Vorwärmer oder Kalzinator) mit einer SNCR-Einrichtung zur Minderung der Stickoxide an. Das Bypassgas wird üblicherweise im Bereich des Brennofeneinlaufs vom Abgasstrang abgezweigt und nach dem Vorwärmer oder Kalzinator wieder an den Abgasstrang angeschlossen oder emittiert über einen separaten Kamin.

In einer weiteren Ausführungsform der Erfindung erfolgt vor Schritt b) in Schritt a) eine Temperatureinstellung des Abgases auf 480 °C bis 220 °C durch Zumischung von kaltem Gas und/oder durch Verdampfung einer Flüssigkeit und/oder durch Wärmeauskopplung. Weiter bevorzugt erfolgt in Schritt a) eine Abkühlung des Abgases auf 440 °C bis 260 °C. Besonders bevorzugt erfolgt in Schritt a) eine Abkühlung des Abgases auf 400 °C bis 260 °C. Die Temperatureinstellung umfasst eine Abkühlung und ein Aufwärmen des Abgases. Bevorzugt handelt es sich bei der Temperatureinstellung um eine Abkühlung

In einer weiteren Ausführungsform der Erfindung erfolgt die Abkühlung durch Verdampfung einer Flüssigkeit, wobei als Flüssigkeit Wasser gewählt wird. Wasser ist durch die große Wärmekapazität, hohe Verdampfungsenthalphie und Umweltverträglichkeit besonders geeignet.

In einer weiteren Ausführungsform der Erfindung erfolgt die Temperaturanpassung des Abgases an das zuvor genannten Temperaturfenster durch eine Wärmeverschiebung, Quenche eines weiteren Gases aus dem Prozess oder Zufeuerung.

Erfindungsgemäß erfolgt nach Schritt d) in Schritt e) eine weitere Abscheidung von Staub in einem Abscheider. Beispielsweise wird ein Fliehkraftabscheider oder ein Elektroabscheider verwendet. Der Staub aus Schritt e) kann im Gesamtprozess anderen im Prozess anfallenden Materialströmen wie dem Zement beigemengt werden. Ebenfalls ist eine Aufbereitung des in Schritt e) anfallenden Staubes möglich. Bevorzugt wird dazu ein im Gesamtprozess benötigter Abscheider genutzt und kein zusätzlicher Abscheider eingesetzt.

In einer weiteren Ausführungsform der Erfindung erfolgt zwischen Schritt b) und c) eine Erfassung der Staubeigenschaften. Besonders bevorzugt werden gemäß den erfassten Staubeigenschaften die Art und Menge des bzw. der zugegebenen Feststoffe eingestellt. Durch diese Rückkopplung ist eine besonders effiziente und zuverlässige Reinigung der Abgase möglich. Hierdurch können insbesondere Prozessschwankungen beispielsweise basierend auf Schwankungen der Zusammensetzung der Rohmaterialien und Brennstoffe ausgeglichen werden. Die Einstellung der Staubeigenschaften in Schritt c) kann manuell, halbautomatisiert oder vollautomatisiert erfolgen. Weiterhin ist die Zugabe des oder der Feststoffe über ein staubbeladenes Gas beispielsweise eines Teilstroms des Ofenabgases möglich. Auch ist es möglich den Staub aus Schritt e) ganz oder teilweise zurückzuführen, um die Staubeigenschaften in Schritt c) einzustellen.

In einer weiteren Ausführungsform der Erfindung ist die erfasste Staubeigenschaft ausgewählt aus der Gruppe umfassend chemische Zusammensetzung, Partikelgrößenverteilung, Abrasionsverhalten und Kohäsionsverhalten. Diese Eigenschaften haben sich als besonders wesentlich herausgestellt.

In einer weiteren Ausführungsform der Erfindung werden zur Anpassung der Staubeigenschaften des Gesamtstaubs Rohmehl oder Filterstaub eingesetzt. Diese haben sich als besonders vorteilhaft zur Einstellung der Staubeigenschaften erwiesen. Eine Aufgabe von Rohmehl und / oder Filterstaub kann beispielhaft sinnvoll sein um Feinstaub im Abgas im submikronen Bereich und Aerosole zu binden.

In einer weiteren Ausführungsform der Erfindung wird in Schritt b) die Entstaubung mittels einer Absetzkammer, Fliehkraftabscheider oder eines Filterelements, bevorzugt mittels eines Elektrofilters, durchgeführt.

Erfindungsgemäß erfolgt die Minderung von gasförmigen Bestandteilen in Schritt d) mittels eines Katalysators. Bevorzugt wird, dass der Katalysator aus Elementen mit Wabenstruktur gebildet ist.

In einer weiteren Ausführungsform der Erfindung ist der Katalysator beispielsweise ausgewählt aus der Gruppe umfassend Titandioxid, Vanadiumpentoxid, Wolframtrioxid,Molybdänoxid, Eisenoxid und Zeolithe.

In einer weiteren Ausführungsform der Erfindung erfolgt durch die Einstellung der Chemie des Reststaubes in Schritt c) eine Senkung von Katalysatorgiften. Durch die Zugabe von Feststoff, welcher keine Katalysatorgifte aufweist, wird die Kontaktwahrscheinlichkeit zwischen mit Katalysatorgift enthaltenem Staub und dem Katalysator verringert und so die Standzeit des Katalysators erhöht und somit die Zuverlässigkeit des Verfahrens zur Minderung gesteigert. Bei einer beispielhaften Anreicherung von Thallium im Reststaub, welches bekanntermaßen als starkes Katalysatorgift gilt, würde ein thalliumarmer bzw. -freier Feststoff gewählt um die Gesamtkonzentration zu senken.

In einer weiteren Ausführungsform der Erfindung durch die Einstellung der Chemie des Reststaubes in Schritt c) erfolgt beispielsweise eine Senkung von Salzkonzentrationen. Grundsätzlich ist eine durch Zugabe ausgewählter Feststoffe niedrige Salzkonzentration anzustreben um sowohl die Gefahr der Katalysatordeaktivierung als auch Schwierigkeiten beim Staubhandling wie z.B. die Staubabreinigung beim Katalysator gering zu halten. Beispielsweise wird die Neigung zur Klebrigkeit der Stäube durch eine erhöhte Chlorkonzentration gefördert. Generell kann durch die Zugabe von Feststoffen eine Änderung des Handlingverhaltens bezüglich beispielsweise Kleben und/oder Anhaften und/oder Staubaustrag erreicht werden.

In einer weiteren Ausführungsform der Erfindung erfolgt bei Einstellungen der abrasiven Staubeigenschaften, um beispielsweise eine längere physikalische Standzeit des Katalysators zu ermöglichen, insbesondere eine Senkung des Siliziumanteils oder des Anteils amorpher Stoffe. Diese Stoffe weisen regelmäßig eine hohe Härte auf und sind somit regelmäßig für die abrasiven Eigenschaften bestimmend.

Nachfolgend ist das erfindungsgemäße Verfahren anhand eines in den Zeichnungen dargestellten Ausführungsbeispiels näher erläutert.

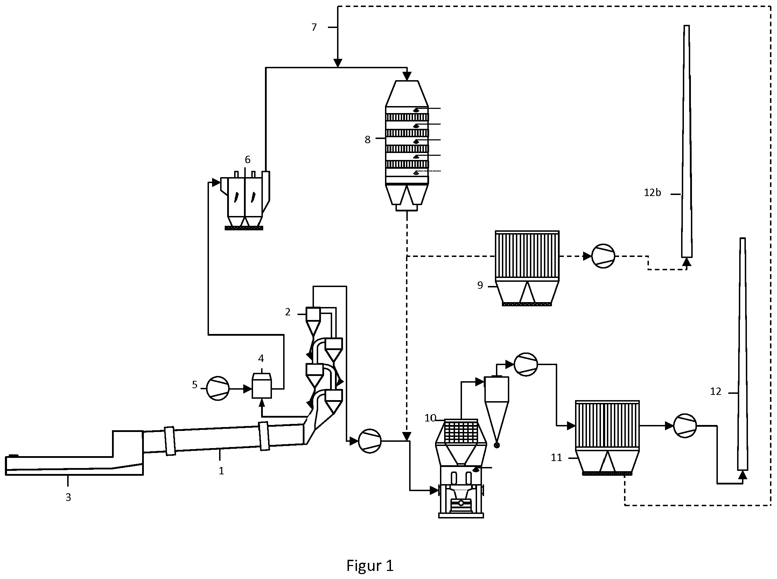

- Figur 1:: Schematische Darstellung einer Anlage zur Reinigung von Abgasen

In Figur 1 ist eine Anlage zur Reinigung von Abgasen schematisch dargestellt, wobei die Anlage zur Ausführung des erfindungsgemäßen Verfahrens in einer beispielhaften Ausführungsform ausgebildet ist.

Die in Figur 1 dargestellte Anlage zur thermischen Aufarbeitung von Mineralstoffen, beispielsweise eine Anlage der Zementindustrie, besteht im Wesentlichen aus einem Vorwärmer 2, der hier als 4-stufiger Zyklonvorwärmer ausgebildet ist und in dem Rohmehl mit Abgasen aus einem Drehrohrofen 1 vorgewärmt werden. Das vorgewärmte Material wird dem Drehrohrofen 1 zugeführt. Das fertige Produkt kann dann über den Kühler 3 entnommen werden.

Die entnommenen Abgase werden in der Mischkammer 4 mit Quenschluft aus einem Quenschluftventilator 5 bevorzugt auf 440 °C bis 260 °C abgekühlt und durch ein Entstaubungsaggregat 6, hier als Elektrofilter dargestellt, geleitet. Im Entstaubungsaggregat 6 wird die Staubbeladung um 50 % bis 99,999 %, beispielsweise um 85 %, reduziert.

Nach der Entstaubung erfolgt ein Zudosieren von Staub 7, wobei der Staub vorzugsweise im ersten Prozessfilter 11 gewonnen wird. Das Abgas mit eingestellten Feststoffeigenschaften wird dann zur Minderung eines oder mehrerer gasförmiger Bestandteile ausgewählt aus der Gruppe umfassend Stickoxid, Kohlenwasserstoffen und Kohlenmonoxid im Katalysator 8 behandelt. Beispielsweise handelt es sich um eine Entstickung nach dem SCR-Verfahren. Das entstickte Abgas kann dann entweder über einen zweiten Prozessfilter 9 und einen zweiten Kamin 12b an die Umwelt abgegeben werden oder beispielsweise einer Rohmühle 10 als Prozessgas zugeführt werden. Nach der Rohmühle 10 wird das Gas über einen ersten Prozessfilter 11 geleitet, um Staub aus dem Abgas zu entfernen, und anschließend über einen ersten Kamin 12 an die Umwelt abgegeben.

### Bezugszeichen:

- 1.: Drehrohrofen
- 2.: Zyklonvorwärmer
- 3.: Kühler
- 4.: Mischkammer
- 5.: Quenschluftventilator
- 6.: Entstaubungsaggregat
- 7.: Zudosierung von Staub
- 8.: Katalysator
- 9.: Zweiter Prozessfilter
- 10.: Rohmühle
- 11.: Erster Prozessfilter
- 12.: Erster Kamin
- 12b: Zweiter Kamin

## Patentansprüche

1. Verfahren zur Reinigung von Abgasen bei der thermischen Aufarbeitung von Mineralstoffen, wobei die Abgase Stäube beinhalten, wobei die Stäube im Abgas schleißende, deaktivierende oder klebende Stäube sind, wobei das Verfahren die folgenden Verfahrensschritten umfasst:
b) Entstaubung des Abgases, wobei die Staubbeladung um 30 % bis 99,999 % reduziert wird,
c) Einstellung der Eigenschaften des Reststaubes durch Zugeben von einem oder mehreren Feststoffen, wobei die Eigenschaften den Verschleiß und/oder die Deaktivierung und/oder das Verkleben eines Katalysators betreffen, wobei die zugegebenen ein oder mehreren Feststoffe bevorzugt Stäube sind, die keine oder nur geringe schleißende, deaktivierende oder klebrige Eigenschaften aufweisen,
d) Minderung eines oder mehrerer gasförmiger Bestandteile ausgewählt aus der Gruppe umfassend Stickoxid, Kohlenwasserstoffen und Kohlenmonoxid mittels einer katalytischen Minderungstechnologie,
e) Erfolgen einer weiteren Abscheidung von Staub in einem Abscheider.

2. Verfahren nach Anspruch 1, **dadurch gekennzeichnet, dass** der oder die in Schritt c) zugegebene(n) Feststoff(e) ausgewählt ist/sind aus der Gruppe umfassend Aktivkohle, Zement, Rohmehl, Filterstaub und Branntkalk oder eine Kombination aus Stoffen dieser Gruppe ist/sind.

3. Verfahren nach einem der vorangegangenen Ansprüche, **dadurch gekennzeichnet, dass** vor Schritt b) in Schritt a) eine Temperatureinstellung des Abgases auf 480 °C bis 220 °C durch Zumischung von kaltem Gas erfolgt.

4. Verfahren nach einem der vorangegangenen Ansprüche 2 bis 3, **dadurch gekennzeichnet, dass** zwischen Schritt b) und c) eine Erfassung der Staubeigenschaften erfolgt.

5. Verfahren nach Anspruch 4, **dadurch gekennzeichnet, dass** gemäß den erfassten Staubeigenschaften die Art und Menge des zugegebenen Feststoffs eingestellt werden.

6. Verfahren nach Anspruch 5, **dadurch gekennzeichnet, dass** die erfasste Staubeigenschaft ausgewählt ist aus der Gruppe umfassend chemische Zusammensetzung, Partikelgrößenverteilung, Abrasionsverhalten und Kohäsionsverhalten.

7. Verfahren nach einem der Ansprüche 4 bis 6, **dadurch gekennzeichnet, dass** zur Anpassung der Staubeigenschaften des Gesamtstaubs Rohmehl oder Filterstaub eingesetzt werden.

8. Verfahren nach einem der vorangegangenen Ansprüche, **dadurch gekennzeichnet, dass** die Minderung von gasförmigen Bestandteilen in Schritt d) mittels eines Katalysators (8) erfolgt, wobei Katalysator (8) aus Elementen mit Wabenstruktur ausgebildet wird.

9. Verfahren nach einem der vorangegangenen Ansprüche, **dadurch gekennzeichnet, dass** die aufgegeben Feststoffanteile wenigsten teilweise rezirkuliert werden.

10. Verfahren nach einem der vorangegangenen Ansprüche, bei dem der aufgegebene Feststoffanteil in weiteren Prozessschritten genutzt wird.

## Claims

1. Process for purifying offgases in the thermal treatment of mineral materials, where the offgases comprise dusts, where the dusts in the offgas are sealing, deactivating or adhesive dusts, where the process comprises the following process steps:
b) dedusting of the offgas, where the dust loading is reduced by from 30% to 99.999%,
c) setting of the properties of the residual dust by addition of one or more solids, where the properties concern the wear and/or the deactivation and/or the conglutination of a catalyst, where the one or more solids added are preferably dusts which have no or only slight wearing, deactivating or adhesive properties,
d) reduction of one or more gaseous constituents selected from the group consisting of nitrogen oxide, hydrocarbons and carbon monoxide by means of a catalytic reduction technology.
e) further removal of dust in a separator.

2. Process according to Claim 1, **characterized in that** the solid(s) added in step c) is/are selected from the group consisting of activated carbon, cement, raw meal, filter dust and quicklime or a combination of materials of this group.

3. Process according to any of the preceding claims, **characterized in that** the temperature of the offgas is adjusted to from 480°C to 220°C by mixing in cold gas in step a) before step b).

4. Process according to any of the preceding Claims 2 to 3, **characterized in that** a determination of the dust properties is carried out between step b) and c) .

5. Process according to Claim 4, **characterized in that** the type and amount of the solid added is set in accordance with the dust properties determined.

6. Process according to Claim 5, **characterized in that** the dust property determined is selected from the group consisting of chemical composition, particle size distribution, abrasion behaviour and cohesion behaviour.

7. Process according to any of Claims 4 to 6, **characterized in that** raw meal or filter dust are used for adapting the dust properties of the total dust.

8. Process according to any of the preceding claims, **characterized in that** the reduction of gaseous constituents in step d) is carried out by means of a catalyst (8), where the catalyst (8) is formed by elements having a honeycomb structure.

9. Process according to any of the preceding claims, **characterized in that** the proportions of solid introduced are at least partially recirculated.

10. Process according to any of the preceding claims, wherein the proportion of solid introduced is utilized in further process steps.

## Revendications

1. Procédé de purification de gaz d'échappement lors du traitement thermique de matières minérales, les gaz d'échappement contenant des poussières, les poussières dans le gaz d'échappement étant des poussières usantes, désactivantes ou collantes, le procédé comprenant les étapes de procédé suivantes :
b) le dépoussiérage du gaz d'échappement, le chargement en poussières étant réduit de 30 % à 99,999 %,
c) l'ajustement des propriétés de la poussière résiduelle par ajout d'une ou de plusieurs matières solides, les propriétés concernant l'usure et/ou la désactivation et/ou le collage d'un catalyseur, la ou les matières solides ajoutées étant de préférence des poussières qui ne présentent pas ou qui présentent uniquement de faibles propriétés usantes, désactivantes ou collantes,
d) la réduction d'un ou de plusieurs constituants gazeux choisis dans le groupe comprenant l'oxyde d'azote, les hydrocarbures et le monoxyde de carbone au moyen d'une technologie de réduction catalytique,
e) la réalisation d'une séparation supplémentaire de poussière dans un séparateur.

2. Procédé selon la revendication 1, **caractérisé en ce que** la ou les matières solides ajoutées à l'étape c) sont choisies dans le groupe comprenant le charbon actif, le ciment, la farine crue, la poussière de filtration et la chaux calcinée ou une combinaison de matières de ce groupe.

3. Procédé selon l'une quelconque des revendications précédentes, **caractérisé en ce qu'**un ajustement de température du gaz d'échappement à 480 °C à 220 °C par incorporation de gaz froid a lieu à l'étape a) avant l'étape b).

4. Procédé selon l'une quelconque des revendications 2 à 3 précédentes, **caractérisé en ce qu'**une détermination des propriétés de la poussière a lieu entre les étapes b) et c) .

5. Procédé selon la revendication 4, **caractérisé en ce que** le type et la quantité de la matière solide ajoutée sont ajustés en fonction des propriétés de la poussière déterminées.

6. Procédé selon la revendication 5, **caractérisé en ce que** la propriété de la poussière déterminée est choisie dans le groupe comprenant la composition chimique, la distribution des tailles de particules, le comportement d'abrasion et le comportement de cohésion.

7. Procédé selon l'une quelconque des revendications 4 à 6, **caractérisé en ce que** de la farine crue ou de la poussière de filtration est utilisée pour l'adaptation des propriétés de poussière de la poussière entière.

8. Procédé selon l'une quelconque des revendications précédentes, **caractérisé en ce que** la réduction des constituants gazeux à l'étape d) a lieu au moyen d'un catalyseur (8), le catalyseur (8) étant formé à partir d'éléments à structure alvéolée.

9. Procédé selon l'une quelconque des revendications précédentes, **caractérisé en ce que** les fractions de matière solide ajoutées sont au moins partiellement recirculées.

10. Procédé selon l'une quelconque des revendications précédentes, selon lequel la fraction de matière solide ajoutée est utilisée dans d'autres étapes de procédé.
